(19) Europäisches Patentamt
European Patent Office
Office européen des brevets

(11) EP 4 036 137 A1

(12) EUROPEAN PATENT APPLICATION
published in accordance with Art. 153(4) EPC

(43) Date of publication:
03.08.2022 Bulletin 2022/31

(21) Application number: 20867624.7

(22) Date of filing: 28.09.2020

(51) International Patent Classification (IPC):
C08G 18/38 (2006.01)    C08G 18/24 (2006.01)
C08K 5/521 (2006.01)    C08L 75/04 (2006.01)
G02B 1/04 (2006.01)    G02C 7/10 (2006.01)

(52) Cooperative Patent Classification (CPC):
C08G 18/24; C08G 18/38; C08K 5/521;
C08L 75/04; G02B 1/04; G02C 7/00; G02C 7/10

(86) International application number:
PCT/JP2020/036741

(87) International publication number:
WO 2021/060563 (01.04.2021 Gazette 2021/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.09.2019 JP 2019177886

(71) Applicant: Hoya Lens Thailand Ltd.
Pathumthani 12130 (TH)

(72) Inventors:
• OHNISHI, Tomofumi
  Tokyo 160-8347 (JP)
• SANO, Yoshio
  Tokyo 160-8347 (JP)

(74) Representative: Hoffmann Eitle
Patent- und Rechtsanwälte PartmbB
Arabellastraße 30
81925 München (DE)

(54) POLYMERIZABLE COMPOSITION FOR OPTICAL MEMBERS, OPTICAL MEMBER, AND COLORED OPTICAL MEMBER

(57) A polymerizable composition for optical components according to one embodiment of the present disclosure includes a polyiso(thio)cyanate compound (A) having one or more aromatic rings in one molecule, a polythiol compound (B) having three or more mercapto groups in one molecule, and an acidic phosphate ester compound (C), wherein the content of the acidic phosphate ester compound (C) is 0.1 to 3.0 parts by mass with respect to a total amount of 100 parts by mass of the polyiso(thio)cyanate compound (A) and the polythiol compound (B), and wherein the content of a polymerization catalyst is 0.006 parts by mass or less with respect to a total amount of 100 parts by mass of the polyiso(thio)cyanate compound (A) and the polythiol compound (B).

EP 4 036 137 A1

**Description**

[Technical Field]

The present disclosure relates to a polymerizable composition for optical components, an optical component, and a colored optical component, and more specifically, to a polymerizable composition for optical components containing a polythiol compound and a polyiso(thio)cyanate compound, and an optical component and a colored optical component obtained from the polymerizable composition for optical components.

[Background Art]

Plastic spectacle lenses are lighter and have better impact durability than glass spectacle lenses. Therefore, in the current spectacle lens market, plastic spectacle lenses are mainstream.

It is known that a plastic lens having a high refractive index can be obtained by reacting a polyisocyanate compound with a polythiol compound. For example, PTL 1 discloses a sulfur-containing urethane resin lens obtained by heating and curing a composition containing tetrathiol and at least one ester compound selected from among a polyisocyanate compound, a polyisothiocyanate compound, and an isothiocyanate compound having an isocyanate group. It is described that this lens is colorless and transparent and has physical properties such as a high refractive index, low dispersion, and excellent heat resistance, and also has excellent productivity.

In addition, PTL 2 and PTL 3 disclose a polymerizable composition containing a polythiol compound and a polyiso(thio)cyanate compound, wherein a thiol equivalent ratio, which is a measured value of a thiol equivalent to a theoretical value of a thiol equivalent of a polythiol compound, is in a specific range. It can be said that, when a specific polythiol compound having a specific thiol equivalent ratio is contained, it is possible to prevent the occurrence of white turbidity, optical distortion, and stripes in a transparent resin obtained by polymerizing the polymerizable composition.

In recent years, the number of components that should be avoided due to environmental considerations has gradually increased, and restrictions on the components that can be used for raw materials for a spectacle lens are expected to increase in the future. Therefore, it is considered desirable to reduce, for example, the used amount of a component using heavy metals such as a polymerization catalyst, with respect to a polymerizable composition containing a polythiol compound and a polyiso(thio)cyanate compound.

On the other hand, for spectacle lenses, it may be required to color a spectacle lens to form a colored optical component in the use of sunglasses for reducing glare, the use of spectacle lenses to which fashionability is imparted, and the like. Such spectacle lenses are produced by a method (a) in which a plastic lens is molded by mixing a colorant such as a dye with a raw material, a method (b) in which the lens after molding is immersed in a solution containing a colorant such as a dye and thus the surface of the lens is impregnated with the colorant, a method (c) in which a coating material containing a colorant is applied to the surface of the lens after molding and a colored layer is provided by attaching a colored film, or the like.

[Citation List]

[Patent Literature]

[PTL 1] Japanese Patent Application Publication No. H7-252207
[PTL 2] Japanese Patent Application Publication No. 2016-6958
[PTL 3] Japanese Patent Application Publication No. 2016-69582

[Summary of Invention]

[Technical Problem]

The method (a) has problems that the amount of the colorant used may be large, the colorant may not be uniformly dispersed, and unevenness may occur. In addition, in the method (c), problems that the colored layer cannot be uniformly formed and the colored layer may peel off during use are of concern. The method (b) has an advantage that these problems are less likely to occur.

However, in the case of a lens obtained by polymerizing a polymerizable composition containing a polythiol compound and a polyiso(thio)cyanate compound, there are problems that staining with a colorant is difficult, a long time is required for staining, and staining failure may occur. In addition, if staining is performed under severe conditions such as a high staining temperature, there is a risk of optical properties deteriorating due to deformation and deterioration of the optical component. In addition, if the stainability is adjusted by changing the type and ratio of polymerizable monomers, it is necessary to significantly change polymerization conditions, and there is a risk that the obtained optical component may not exhibit intended characteristics. Therefore, there is a problem that it is difficult to use the method (b).

Accordingly, a novel and beneficial polymerizable composition for optical components in which, without changing the type and ratio of polymerizable monomers used, the polymer can be easily stained with a dye, and the content of the polymerization catalyst can be reduced is required.

Here, one embodiment of the present disclosure relates to a polymerizable composition for optical components, an optical component, and a colored optical component in which a polymer thereof is easily stained with a dye, and the content of a polymerization catalyst can be reduced.

[Solution to Problem]

A polymerizable composition for optical components according to one embodiment of the present disclosure includes a polyiso(thio)cyanate compound (A) having one or more aromatic rings in one molecule, a polythiol compound (B) having three or more mercapto groups in one molecule, and an acidic phosphate ester compound (C), wherein the content of the acidic phosphate ester compound (C) is 0.1 to 3.0 parts by mass with respect to a total amount of 100 parts by mass of the polyiso(thio)cyanate compound (A) and the polythiol compound (B), and wherein the content of a polymerization catalyst is 0.006 parts by mass or less with respect to a total amount of 100 parts by mass of the polyiso(thio)cyanate compound (A) and the polythiol compound (B).

[Advantageous Effects of Invention]

According to the polymerizable composition for optical components according to one embodiment of the present disclosure, a polymer thereof is easily stained with a dye and the content of the polymerization catalyst can be reduced. In addition, the optical component according to one embodiment of the present disclosure can be easily stained with a dye, and the content of the polymerization catalyst can be reduced. In addition, the colored optical component according to one embodiment of the present disclosure is favorably colored at a sufficient concentration, has a low content of a polymerization catalyst, and can exhibit favorable optical properties.

[Description of Embodiments]

In this specification, for a preferable numerical value range (for example, a range of a content), the lower limit values and the upper limit values stated in stages can be independently combined. For example, from the description "preferably 10 to 90 and more preferably 30 to 60", "preferable lower limit value (10)" and "more preferable upper limit value (60)" are combined to "10 to 60".

[Polymerizable composition for optical components]

A polymerizable composition for optical components according to one embodiment of the present disclosure contains a polyiso(thio)cyanate compound (A) having one or more aromatic rings in one molecule, a polythiol compound (B) having three or more mercapto groups in one molecule, and an acidic phosphate ester compound (C),

the content of the acidic phosphate ester compound (C) being 0.1 to 3.0 parts by mass with respect to a total amount of 100 parts by mass of the polyiso(thio)cyanate compound (A) and the polythiol compound (B), and
the content of the polymerization catalyst being 0.006 parts by mass or less with respect to a total amount of 100 parts by mass of the polyiso(thio)cyanate compound (A) and the polythiol compound (B).

Here, in order to avoid duplication of description, in this specification, the "polyiso(thio)cyanate compound (A) having one or more aromatic rings in one molecule" is referred to as a "polyiso(thio)cyanate compound (A)", the "polythiol compound (B) having three or more mercapto groups in one molecule" is referred to as a "polythiol compound (B)", and the "polymerizable composition for optical components" is referred to as a "polymerizable composition".

(Polyiso(thio)cyanate compound (A) having one or more aromatic rings in one molecule)

The polyiso(thio)cyanate compound (A) used in the polymerizable composition for optical components is not particularly limited as long as it has one or more aromatic rings and two or more iso(thio)cyanate groups in one molecule and is used for preparing the polymerizable composition for optical components. The compound includes, for example,

aromatic polyisocyanate compounds such as 1,2-diisocyanatobenzene, 1,3-diisocyanatobenzene, 1,4-diisocyanatobenzene, 2,4-diisocyanate toluene, ethyl phenylene diisocyanate, isopropylphenylene diocyanate, dimethylphenylene diocyanate, diethylphenylene diocyanate, diisopropylphenylene diisocyanate, trimethylbenzene triisocyanate, benzene triisocyanate, biphenyl diisocyanate, toluidine diisocyanate, 4,4'-methylenebis(phenyl isocyanate), 4,4'-methylenebis(2-methylphenylisocyanate), and bibenzyl-4,4'-diisocyanate, bis(isocyanatephenyl)ethylene; polyisocyanate compounds containing an aromatic ring compound such as xylylene diisocyanate, bis(isocyanate ethyl)benzene, bis(isocyanate propyl)benzene, α,α,α',α'-tetramethylxylylene diisocyanate, bis(isocyanate butyl)benzene, bis(isocyanate methyl)naphthalene and bis(isocyanate methylphenyl)ether; aromatic sulfide polyisocyanate compounds such as 2-isocyanate phenyl-4-isocyanate phenyl sulfide, bis(4-isocyanate phenyl)sulfide and bis(4-isocyanate methylphenyl)sulfide; and aromatic disulfide isocyanate compounds such as bis(4-isocyanate phenyl)disulfide, bis(2-methyl-5-isocyanate phenyl)disulfide, bis(3-methyl-5-isocyanatephenyl)disulfide, bis(3-methyl-6-isocyanatephenyl)disulfide, bis(4-methyl-5-isocyanatephenyl)disulfide, bis(3-methoxy-4-isocyanatephenyl)disulfide, and bis(4-methoxy-3-isocyanatephenyl)disulfide; and aromatic polyisothiocyanate compounds such as 1,2-diisothiocyanate benzene, 1,3-diisothiocyanate benzene, 1,4-diisothiocyanate benzene, 2,4-diisothiocyanate toluene, 2,5-diisothiocyanate-m-xylene, 4,4'-methylenebis(phenyl isothiocyanate), 4,4'-methylenebis(2-methylphenyl isothiocyanate), 4,4'-methylenebis(3-methylphenyl isothiocyanate), 4,4'-diisothiocyanate benzophenone, 4,4'-diisothiocyanate-3,3'-dimethylbenzophenone and bis(4-isothiocyanate phenyl)ether. These polyiso(thio)cyanate compounds may be used alone or two or more thereof may be used in combination.

More preferably, the polyiso(thio)cyanate compound (A) contains at least one selected from the group consisting of xylylene diisocyanate, tolylene diisocyanate, 4,4'-diphenylmethane diisocyanate and phenylene diisocyanate among these polyiso(thio)cyanate compounds. Still more preferably, the polyiso(thio)cyanate compound contains xylylene diisocyanate in order to obtain a polymerizable composition for a thiourethane spectacle lens with high refraction.

The polyiso(thio)cyanate component contained in the polymerizable composition for optical components may be the polyiso(thio)cyanate compound (A) alone, or may further contain other polyiso(thio)cyanate compounds having no aromatic ring as long as the effects of the present invention are not impaired.

The other polyiso(thio)cyanate compounds are not particularly limited as long as they can be used for preparing a polymerizable composition for optical components and have no aromatic ring. Examples of other polyiso(thio)cyanate compounds include aliphatic polyisocyanate compounds such as hexamethylene diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanate-4-isocyanate methyl octane, bis(isocyanate ethyl)carbonate, bis(isocyanate ethyl)ether, lysine diisocyanate methyl ester and lysine triisocyanate;

sulfur-containing aliphatic polyisocyanate compounds such as bis(isocyanate methyl)sulfide, bis(isocyanate ethyl)sulfide, bis(isocyanate propyl)sulfide, bis(isocyanate hexyl)sulfide, bis(isocyanate methyl)sulfone, bis(isocyanate methyl)disulfide, bis(isocyanate ethyl)disulfide, bis(isocyanate propyl)disulfide, bis(isocyanate methylthio)methane, bis(isocyanate ethylthio)methane, bis(isocyanate methylthio)ethane, bis(isocyanate ethylthio)ethane, 1,5-diisocyanate-2-isocyanate methyl-3-thiapentane, 1,2,3-tris(isocyanate methylthio)propane, 1,2,3-tris(isocyanate ethylthio)propane, 3,5-dithia-1,2,6,7-heptane tetraisocyanate, 2,6-diisocyanate methyl-3,5-dithia-1,7-heptane diisoscinate, 2,5-diisocyanate methylthiophene and 2,5-diisocyanate methylthiophene and 4-isocyanate ethylthio-2,6-dithia-1,8-octanediisocyanate;

aliphatic polyisothiocyanate compounds such as 1,2-diisothiocyanate ethane and 1,6-diisothiocyanate hexane; alicyclic polyisothiocyanate compounds such as cyclohexane diisothiocyanate; carbonyl isothiocyanate compounds such as 1,3-benzenedicarbonyl diisothiocyanate, 1,4-benzenedicarbonyl diisothiocyanate and (2,2-pyridine)-4,4-dicarbonyl diisothiocyanate; and sulfur-containing aliphaticiso(thio)cyanate compounds such as thiobis(3-isothiocyanate propane), thiobis(2-isothiocyanate ethane) and dithiobis(2-isothiocyanate ethane);

sulfur-containing alicyclic polyisocyanate compounds such as isocyanatomethyl-2-methyl-1,3-dithiolane; and sulfur-containing alicyclic compounds such as 2,5-diisothiocyanate thiophene and 2,5-diisothiocyanate-1,4-dithiane; and compounds having an isocyanate group and an isothiocyanate group such as 1-isocyanate-6-isothiocyanate hexane, 1-isocyanate-4-isothiocyanate cyclohexane, 1-isocyanate-4-isothiocyanate benzene, 4-methyl-3-isocyanate-1-isothiocyanate benzene, 2-isocyanate-4,6-diisothiocyanate 1,3,5-triazine, 4-isocyanatephenyl-4-isothiocyanate phenylsulfide and 2-isocyanate ethyl-2-isothiocyanate ethyl disulfide. These polyiso(thio)cyanate compounds may be used alone or two or more thereof may be used in combination.

In addition, in addition to the polyiso(thio)cyanate compound (A), halogen-substituted products such as chlorine-substituted products and bromine-substituted products, alkyl-substituted products, alkoxy-substituted products, nitro-substituted products, prepolymer type modified products with polyhydric alcohols, carbodiimide modified products, urea-modified products, burette-modified products, dimerization and trimerization reaction products, and the like can also be used. These compounds may be used alone or two or more thereof may be used in combination.

The amount of the polyiso(thio)cyanate compound (A) is preferably 50 mass% or more, more preferably 70 mass% or more, still more preferably 90 mass% or more, and yet more preferably 95 mass% or more, and 100 mass% or less in the polyisocyanate component contained in the polymerizable composition for optical components.

(Polythiol compound (B) having three or more mercapto groups in one molecule)

The polythiol compound (B) is not particularly limited as long as it is used for preparing the polymerizable composition for optical components and has three or more mercapto groups in one molecule. The polythiol compound (B) includes, for example, ester compounds of polyol compounds such as pentaerythritol, glycerin and trimethylolpropane and acids such as thioglycolic acid, mercaptopropionic acid, thiolactic acid and thiosalicylic acid, 1,2,3-propane trithiol, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(2-mercaptoethyl)benzene, 1,2,4-tris(2-mercaptoethyl)benzene, 1,3,5-tris(2-mercaptoethyl)benzene, 1,2,3-tris(2-mercaptoethyleneoxy)benzene, 1,2,4-tris(2-mercaptoethyleneoxy)benzene, 1,3,5-tris(2-mercaptoethyleneoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl) benzene, 1,2,3,4-tetrakis (2-mercaptoethyl)benzene, 1,2,3,5-tetrakis(2-mercaptoethyl)benzene, 1,2,4,5-tetrakis(2-mercaptoethyl) benzene, 1,2,3,4-tetrakis(2-mercaptoethyleneoxy)benzene, 1,2,3,5-tetrakis(2-mercaptoethyleneoxy)benzene, 1,2,4,5-tetrakis(2-mercaptoethyleneoxy)benzene, 1,2,3-tris(2-mercaptoethylthio)benzene, 1,2,4-tris(2-mercaptoethylthio)benzene, 1,3,5-tris(2-mercaptoethylthio)benzene, 1,2,3,4-tetrakis(2-mercaptoethylthio)benzene, 1,2,3,5-tetrakis(2-mercaptoethylthio)benzene, 1,2,4,5-tetrakis(2-mercaptoethylthio)benzene, 1,2,3-tris(2-mercaptoethylthio)propane, and tetrakis(2-mercaptoethylthiomethyl)methane. Here, examples of ester compounds of the above polyol compounds and acids include trimethylolpropanetris (2-mercaptoacetate), trimethylolpropanetris (3-mercaptopropionate), pentaerythritol tetrakis (2-mercaptoacetate) and pentaerythritol tetrakis(3-mercaptopropionate).

Other examples of polythiol compounds (B) having three or more mercapto groups in one molecule include linear or branched aliphatic polythiol compounds such as 1,2,3-propanetrithiol, 2-(2-mercaptoethylthio)propane-1,3-dithiol, 2,2-bis(mercaptomethyl)-1,3-propanedithiol, tris(mercaptomethylthio)methane, 1,1,2,2-tetrakis(mercaptoethylthio)ethane, 1,1,3,3-tetrakis(mercaptoethylthio)propane, 3-mercaptomethyl-1,5-dimercapto-2,4-dithiapentane, tetrakis(mercaptoethylthio)propane, bis(2-mercaptoethylthio)-3-mercaptopropane, 4-mercaptomethyl-1,8-dimercapto-3,6-dithiaoctane, 4,7-bis(mercaptomethyl)-3,6,9-trithia-1,11-undecandithiol, 4,8-bis(mercaptomethyl)-3,6,9-trithia-1,11-undecandithiol, and 5,7-bis(mercaptomethyl)-3,6,9-trithia-1,11-undecandithiol.

These polythiol compounds may be used alone or two or more thereof may be used in combination.

In order to obtain a more remarkable effect of the present invention, the polythiol component preferably contains at least one selected from the group consisting of 2,5-bis(mercaptomethyl)-1,4-dithiane, pentaerythritol tetrakis(2-mercaptoacetate), pentaerythritol tetrakis(3-mercaptopropionate), 4-mercaptomethyl-1,8-dimercapto-3,6-dithiaoctane, 4,7-bis(mercaptomethyl)-3,6,9-trithia-1,11-undecandithiol, 4,8-bis(mercaptomethyl)-3,6,9-trithia-1,11-undecandithiol, 5,7-bis(mercaptomethyl)-3,6,9-trithia-1,11-undecandithiol trimethylolpropanetris(2-mercaptoacetate), trimethylolpropanetris (3-mercaptopropionate), butanediolbis(2-mercaptoacetate)butanediol bis(3-mercaptopropionate), dipentaerythritol hexakis(2-mercaptoacetate), and dipentaerythritol hexakis(3-mercaptopropionate), and more preferably contains at least one selected from the group consisting of 4,7-bis(mercaptomethyl)-3,6,9-trithia-1,11-undecandithiol, 4,8-bis(mercaptomethyl)-3,6,9-trithia-1,11-undecandithiol, 5,7-bis(mercaptomethyl)-3,6,9-trithia-1,11-undecandithiol, 4-mercaptomethyl-1,8-dimercapto-3,6-dithiaoctane, pentaerythritol tetrakis(3-mercaptopropionate), and 2,5-bis(mercaptomethyl)-1,4-dithiane, pentaerythritol tetrakis(2-mercaptoacetate).

The polythiol component contained in the polymerizable composition for optical components may be only the polythiol compound (B), or may contain a polythiol compound having two or less mercapto groups contained in one molecule as long as the effects of the present invention are not impaired.

The amount of the polythiol compound (B) is preferably 50 mass% or more, more preferably 70 mass% or more, still more preferably 90 mass% or more, yet more preferably 95 mass% or more, and 100 mass% or less in the polythiol component contained in the polymerizable composition for optical components.

Preferable examples of combinations of the polyiso(thio)cyanate compound (A) and the polythiol compound (B) in the polymerizable composition for optical components include the following [1] and [2].

[1]1,3-bis(isocyanatomethyl)benzene, and bis(mercaptomethyl)-3,6,9-trithia-1,11-undecanedithiol, and
[2]1,3-bis(isocyanatomethyl)benzene and 4-mercaptomethyl-1,8-dimercapto-3,6-dithiaoctane.

(Thiol equivalent)

In this specification, the "thiol equivalent" of the polythiol compound is a value obtained by dividing the number of thiol groups contained in one molecule of the polythiol compound by the molecular weight. In addition, the "measured value of the thiol equivalent" of the polythiol compound is a thiol equivalent obtained as follows.

30 mL of chloroform and 30 mL of 2-propanol are added to about 0.1 g of a polythiol compound to be measured to prepare a sample solution. A 0.05 mol/L iodine solution is added dropwise to the sample solution, and the point at which the brown color of the added iodine solution does not appear is set as the end point. Then, the measured value of the thiol equivalent is calculated from the following Formula (1).

thiol equivalent (meq/g)=(titration amount (mL)×factor of iodine solution)/(sample amount (g)×10,000) ... (1)

The "theoretical value of the thiol equivalent" of the polythiol compound is a calculated value obtained by dividing the number of thiol groups contained in one molecule of the polythiol compound by the molecular weight.

The "thiol equivalent ratio" of the polythiol compound is a numerical value expressed by a ratio of the measured value of the thiol equivalent to the theoretical value of the thiol equivalent of the polythiol compound.

The thiol equivalent ratio of the polythiol compound (B) used for preparing the polymerizable composition for optical components is preferably 0.935 or more and 1.000 or less, more preferably 0.975 or more and 1.000 or less, still more preferably 0.980 or more and 1.000 or less, yet more preferably 0.980 or more and less than 1.000, and particularly preferably 0.980 or more and 0.995 or less. When the value is 0.935 or more and 1.000 or less, it is easy to reduce the occurrence of white turbidity and stripes of the optical component obtained from the polymerizable composition for optical components. Here, the thiol equivalent ratio can be adjusted to a desired value by changing the purity of the polythiol compound by adjusting purification conditions during synthesis, and as a result, changing the measured value of the thiol equivalent of the polythiol compound.

(Use ratio of polyiso(thio)cyanate compound (A) and polythiol compound (B))

The use ratio of the polythiol compound (B) and the polyiso(thio)cyanate compound (A) used for preparing the polymerizable composition for optical components according to the embodiment of the present disclosure is preferably in a range of SH group/NCO group=0.3 to 2.0, and more preferably in a range of 0.7 to 1.5.

In addition, the content of the polythiol compound (B) used for preparing the polymerizable composition for optical components according to the embodiment of the present disclosure is preferably larger than the content of the polyiso(thio)cyanate compound (A) in order to easily adjust the ratio of target components to a desired ratio.

The total content of the polyiso(thio)cyanate compound (A) and the polythiol compound (B) is preferably 60 mass% or more, and more preferably 80 mass% or more with respect to the total mass of the polymerizable composition for optical components.

[Acidic phosphate ester compound (C)]

Examples of acidic phosphate ester compounds (C) include acidic phosphoric acid alkyl ester. The number of carbon atoms of the alkyl group of the acidic phosphoric acid alkyl ester is preferably 1 or more, more preferably 4 or more, and preferably 20 or less, and more preferably 12 or less.

The acidic phosphate ester may be either phosphoric acid monoester or phosphoric acid diester, and a mixture of phosphoric acid monoester and phosphoric acid diester is preferable.

Examples of acidic phosphoric acid alkyl esters include isopropyl acid phosphate, butyl acid phosphate, octyl acid phosphate, nonyl acid phosphate, decyl acid phosphate, isodecyl acid phosphate, tridecyl acid phosphate, stearyl acid phosphate, propylphenyl acid phosphate, butyl phenyl acid phosphate, and butoxyethyl acid phosphate. Examples of a mixture of phosphoric acid monoester and phosphoric acid diester include a mixture of butoxyethyl acid phosphate and dibutoxyethyl acid phosphate.

The content of the acidic phosphate ester compound (C) is 0.1 to 3.0 parts by mass, preferably 0.5 to 3.0 parts by mass, more preferably 1.0 to 3.0 parts by mass, still more preferably 1.5 to 3.0 parts by mass, and particularly preferably 2.0 to 3.0 parts by mass with respect to a total amount of 100 parts by mass of the polyiso(thio)cyanate compound (A) and the polythiol compound (B).

When the content of the acidic phosphate ester compound (C) is less than 0.1 parts by mass with respect to a total amount of 100 parts by mass of the polyiso(thio)cyanate compound (A) and the polythiol compound (B), it is not possible to impart high stainability to an optical component produced suing the polymerizable composition for optical components. In addition, when the content of the acidic phosphate ester compound (C) exceeds 3.0 parts by mass with respect to a total amount of 100 parts by mass of the polyiso(thio)cyanate compound (A) and the polythiol compound (B) having three or more mercapto groups in one molecule, an excessive amount of the acidic phosphate ester compound (C) can be used, and there is a risk of the optical component produced using the polymerizable composition for optical components being unable to secure characteristics (transparency, heat resistance, and the like) suitable for practical use.

The acidic phosphate ester compound (C) functions as a release agent, and has an effect of improving the stainability of the optical component produced using the polymerizable composition for optical components. In addition, the acidic phosphate ester compound (C) is assumed to function as a catalyst as will be described below. According to the studies by the inventors, it has been found that the presence of the acidic phosphate ester compound (C) in a desired proportion or higher is required for exhibition of stainability, and even if the acidic phosphate ester compound (C) is added in such a proportion, it does not influence the releasability and optical properties. Therefore, when the acidic phosphate ester compound in a desired proportion or higher is used, it is possible to secure the releasability of the optical component produced using the polymerizable composition for optical components and improve the stainability of the optical component, and it is possible to reduce and eliminate the amount of the polymerization catalyst required for polymerization.

The reason why the acidic phosphate ester compound improves the stainability of the optical component is not limited to this, but the following is estimated as one reason: when the amount of the acidic phosphate ester in the polymerizable composition for optical components is large, the acidic phosphate ester is likely to be present at an interface between a molding die and the polymerizable composition for optical components, and as a result, the hydrophilic functional group of the acidic phosphate ester is likely to be present on the surface of the obtained optical component, and water and hydrophilic components contained in the staining liquid and hydrophilic groups on the surface of the optical component make it easier for a dye to be incorporated into the optical component.

[Other components]

The polymerizable composition for optical components according to one embodiment of the present disclosure may contain only the polyiso(thio)cyanate compound (A) having one or more aromatic rings in one molecule, the polythiol compound (B) having three or more mercapto groups in one molecule, and the acidic phosphate ester compound (C). However, the polymerizable composition for optical components according to one embodiment of the present disclosure may contain, as necessary, compounds other than the polyiso(thio)cyanate compound (A) having one or more aromatic rings in one molecule, polythiol compound (B) having three or more mercapto groups in one molecule, and the acidic phosphate ester compound (C) as long as the effects of the present invention are not impaired. Examples of such compounds include compounds copolymerizable with the above compounds, active hydrogen compounds represented by amines and the like, epoxy compounds, olefin compounds, carbonate compounds, ester compounds other than the acidic phosphate ester compound (C), metals, metal oxides, organometallic compounds and inorganic substances. These may be used alone or two or more thereof may be used in combination.

In addition, depending on purposes, various substances such as a polymerization catalyst, a chain extender, a cross-linking agent, a light stabilizer, a UV absorber, an antioxidant, an oil-soluble dye, a filler, an anticoloring agent, a fluorescent brightening agent, a release agent other than the acidic phosphate ester compound (C), and a bluing agent may be added to the polymerizable composition for optical components of the present disclosure. In addition, in order to adjust the reaction rate to a desired level, a known reaction catalyst used in production of polyurethane can be appropriately added to the polymerizable composition for optical components of the present disclosure.

(Polymerization catalyst)

The polymerization catalyst is preferably a tin-containing compound, more preferably an organic tin compound, and still more preferably an alkyl tin halide compound or an alkyl tin compound.

Examples of alkyl tin halide compounds include dibutyltin dichloride, dimethyltin dichloride, monomethyltin trichloride, trimethyltin chloride, tributyltin chloride, tributyltin fluorolide, and dimethyltin dibromide.

Examples of alkyl tin compounds include dibutyltin diacetate and dibutyltin dilaurate.

Among these, dibutyltin dichloride, dimethyltin dichloride, dibutyltin diacetate, and dibutyltin dilaurate are preferable.

Since the above tin-containing compound generally exhibits a high catalytic action in the polymerization of the polymerizable composition for optical components, it is a polymerization catalyst suitable for obtaining an optical component having favorable characteristics. However, since this compound contains tin, the burden on the environment increases, and it is desirable to reduce the amount used as much as possible.

The content of the polymerization catalyst is 0.006 parts by mass or less, preferably 0.005 parts by mass or less, more preferably 0.003 parts by mass or less, still more preferably 0.001 parts by mass or less, and most preferably 0 parts by mass, with respect to a total amount of 100 parts by mass of the polyiso(thio)cyanate compound (A) having one or more aromatic rings in one molecule and the polythiol compound (B) having three or more mercapto groups in one molecule.

According to the studies by the inventors, it has been found that the amount of the polymerization catalyst used can be reduced or eliminated by using the acidic phosphate ester compound. This is considered to be because the acidic phosphate ester compound exhibits a catalytic action. Therefore, the amount of the polymerization catalyst composed of the tin-containing compound used can be significantly reduced or eliminated. When the amount of the polymerization catalyst added is within the above range, it is possible to obtain a polymerizable composition for optical components having a small burden on the environment.

(UV absorber)

Examples of UV absorbers include benzotriazole compounds, benzophenone compounds, dibenzoylmethane, and dibenzoyl methane compounds. Among these, benzotriazole compounds or benzophenone compounds are preferable.

Examples of benzotriazole compounds include 2-(2-hydroxy-5-methylphenyl)-2H-benzotriazole, 2-(2-hydroxy-3,5-di-tert-butylphenyl)-5-chloro-2H-benzotriazole, 2-(3-tert-butyl-2-hydroxy-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-octylphenyl)-2H-benzotriazole, 2-(2-hydroxy-4-ethyloxyphenyl)-2H-benzotriazole, 2-(2-hydroxy-4-propyloxyphenyl)-2H-benzotriazole, 2-(2-hydroxy-4-octyloxyphenyl)-2H-benzotriazole, and 2-(2-hydroxy-4-octyloxyphenyl)-5-chloro-2H-benzotriazole.

Examples of benzophenone compounds include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, and 2,2'-dihydroxy-4-methoxybenzophenone.

Examples of dibenzoyl methane compounds include 4-tert-butyl-4'-methoxydibenzoylmethane.

These may be used alone or two or more thereof may be used in combination.

The amount of the UV absorber added is preferably 0.01 parts by mass or more, more preferably 0.10 parts by mass or more, still more preferably 0.30 parts by mass or more, and yet more preferably 0.40 parts by mass or more, and preferably 5 parts by mass or less, more preferably 3 parts by mass or less, and still more preferably 2 parts by mass or less with respect to a total amount of 100 parts by mass of the polythiol compound (B) and the polyiso(thio)cyanate compound.

(Bluing agent)

Examples of bluing agents include blue and red dyes and pigments. The amount of the bluing agent added is preferably 2 to 20 ppm, more preferably 3 to 35 ppm, and still more preferably 6 to 30 ppm with respect to the iso(thio)cyanate compound.

[Method of preparing polymerizable composition for optical components]

The polymerizable composition for optical components can be prepared by mixing the polyiso(thio)cyanate compound (A), the polythiol compound (B), the acidic phosphate ester compound (C), and the above other components used as necessary by a general method.

The components can be mixed simultaneously or sequentially in any order. A specific mixing method is not particularly limited, and a method known as a method of preparing a polymerizable composition can be used without any limitation.

In one aspect of the method of preparing a polymerizable composition for optical components, after at least one of a mixture of the polyiso(thio)cyanate compound (A), the polythiol compound (B) having three or more mercapto groups in one molecule, and the above other components used as necessary is prepared, the acidic phosphate ester (C) is mixed in. When the acidic phosphate ester (C) is added and stirred, bubbles may be generated in the raw material, and when the amount of the acidic phosphate ester compound (C) used is large, the generation of bubbles becomes significant. However, when the acidic phosphate ester compound (C) is added in the final stage of the process of preparing a polymerizable composition, it is possible to prevent the generated bubbles from being present for a long time during the producing process, and it is easy to avoid damage to the production facility and deterioration of the quality of the polymerizable composition.

In another aspect of the method of preparing a polymerizable composition for optical components, after at least one of a mixture of the polyiso(thio)cyanate compound (A), the polythiol compound (B) having three or more mercapto groups in one molecule, and the above other components used as necessary is prepared, a bluing agent and the acidic phosphate ester (C) are added to the mixture and mixed. In this manner, when the acidic phosphate ester (C) is added in the final stage of the process of preparing a polymerizable composition and the bluing agent is simultaneously added, it is possible to prevent bubbles from being easily generated during the preparation of the polymerizable composition for optical components, and also it is possible to prevent the bluing agent from being decomposed.

[Optical component and colored optical component]

An optical component can be obtained by polymerizing the above polymerizable composition for optical components to produce a polymer having a desired shape. That is, the optical component is made of a polymer of the polymerizable composition for optical components. As will be described below, the optical component can be produced by putting a polymerizable composition for optical components into a molding die, performing polymerization, and releasing and removing the polymer from the molding die.

Examples of optical components include spectacle lenses, camera lenses, prisms, optical fibers, substrates used therefor, substrates for recording media used for optical disks, magnetic disks or the like, and optical filters attached to computer displays. Among these, substrates of spectacle lenses and spectacle lenses are preferable, and substrates of spectacle lenses are more preferable.

Then, as will be described below, the optical component becomes a colored optical component by staining with a dye to a desired concentration. That is, the optical component is obtained by staining the polymer of the polymerizable composition for optical components with a dye. When the optical component is a spectacle lens or a substrate for a spectacle lens, the stained optical component is a stained lens such as sunglasses or a substrate for a stained lens such as sunglasses.

Since the optical component produced using the polymerizable composition for optical components according to the embodiment of the present disclosure has excellent stainability, an optical component stained with a sufficient staining concentration can be easily obtained. In addition, in the optical component according to the embodiment of the present disclosure, since the content of the polymerization catalyst can be reduced, the optical component is environmentally friendly. In addition, since the optical component is easily stained, the colored optical component according to one embodiment of the present disclosure is favorably colored at a sufficient concentration, the optical component is not deformed during staining, and favorable optical properties can be exhibited.

(Spectacle lens)

When the optical component is used as a spectacle lens, the optical component may be directly used as the spectacle lens, or a substrate for a spectacle lens on which a functional layer is formed or which is processed may be used as a spectacle lens.

The surface shape of the spectacle lens is not particularly limited, and may be a flat surface, a convex surface, a concave surface or the like.

The spectacle lens may be a single focus lens, a multifocal lens, a progressive power lens or the like. For example, as an example, regarding a progressive power lens, generally, the lower area includes a near area (near portion) and a progressive area (intermediate area), and the upper area includes a distance area (distance portion).

The spectacle lens may be a finish type spectacle lens or a semi-finish type spectacle lens. Here, the semi-finish type spectacle lens is processed into a spectacle lens that is actually used by polishing or grinding.

The thickness and the diameter of the spectacle lens are not particularly limited, the thickness is generally about 1 to 30 mm, and the diameter is generally about 50 to 100 mm.

The refractive index ne of the spectacle lens is preferably 1.53 or more, more preferably 1.55 or more, still more preferably 1.58 or more, still more preferably 1.60 or more, still more preferably 1.67 or more, still more preferably 1.70 or more, and preferably 1.80 or less.

Regarding the functional layer that can be provided on the spectacle lens, additionally, one or more selected from the group consisting of a hard coat layer, a primer layer, an antireflection film and a water repellent film may be exemplified.

The hard coat layer is provided in order to improve scratch resistance, and preferably can be formed by applying a coating liquid containing a fine particle inorganic substance such as an organosilicon compound, tin oxide, silicon oxide, zirconium oxide, or titanium oxide.

The primer layer is provided in order to improve impact resistance, and for example, the polyurethane is the main component. Here, the content of the polyurethane in the primer layer is preferably 50 mass% or more.

Examples of antireflection films include a film in which silicon oxide, titanium dioxide, zirconium oxide, tantalum pentoxide and the like are laminated.

The water repellent film can be formed using an organosilicon compound having fluorine atoms.

[Method of producing optical component]

In the method of producing an optical component according to the present embodiment, the optical component is molded by a molding die using the polymerizable composition for optical components obtained by the method of producing the polymerizable composition for optical components described above.

When the optical component is a spectacle lens or a substrate for a spectacle lens, preferably, the polymerizable composition for optical components is polymerized by a casting polymerization method. In this case, for example, a spectacle lens or a substrate for a spectacle lens can be obtained by injecting a polymerizable composition for optical components into a mold frame in which a glass or metal mold and a tape or a gasket are combined and performing polymerization.

Specifically, first, the polythiol compound (B) having three or more mercapto groups in one molecule, the polyiso(thio)cyanate compound (A) having one or more aromatic rings in one molecule, the acidic phosphate ester compound (C), and the polymerization catalyst added as necessary are mixed to produce a polymerizable composition for optical components. Then, as necessary, the polymerizable composition for optical components is degassed, the polymerizable composition for optical components is then injected into a molding die, and the polymerizable composition injected into the molding die is polymerized. In the molding die, for example, a glass or metal mold frame is used.

The polymerization conditions of the polymerizable composition for optical components can be appropriately set depending on the polymerizable composition.

The polymerization temperature when a polymerizable resin for an optical component is polymerized in the molding die is, for example, 0°C to 130°C. The polymerization start temperature is preferably 0°C or higher, more preferably 10°C or higher, and preferably 50°C or lower, and more preferably 40°C or lower. It is preferable to raise the temperature from the polymerization start temperature, and then perform heating, curing, and forming. For example, the raised maximum temperature is generally 110°C or higher and 130°C or lower.

The polymerization time when the polymerizable resin for optical components is polymerized in the molding die is, for example, 3 to 96 hours.

After polymerization is completed, the optical component may be released from the mold and may be subjected to an annealing treatment. The temperature of the annealing treatment is preferably 100°C to 150°C.

[Process of staining optical component]

When the optical component, which is a polymer of the polymerizable composition for optical components, is stained with a dye, it can be used as a sunglasses, a spectacle lens to which fashionability is imparted, or a substrate for such a spectacle lens.

In order to stain the optical component, a method of immersing an optical component in a solution containing a dye (dye solution) and thus impregnating the surface of the optical component with the dye (immersion staining method) can be used. Since the optical component produced using the polymerizable composition for optical components according to the embodiment of the present disclosure has excellent stainability, the optical component can be stained at a desired staining concentration in a shorter time than before.

In the staining process, the staining temperature and time can be appropriately set according to a desired staining concentration.

In order to promote staining of the optical component, the staining temperature (the temperature of the dye solution) is preferably 80°C to 100°C, and more preferably 90°C to 98°C.

The staining time is preferably 120 minutes or shorter, more preferably 60 minutes or shorter, and still more preferably 30 minutes or shorter in order to increase the productivity and prevent deformation and deterioration of the optical component, and is preferably 3 minutes or longer, more preferably 5 minutes or longer, and still more preferably 7 minutes or longer in order to perform staining at a required staining concentration.

Since the optical component produced using the polymerizable composition for optical components according to the embodiment of the present disclosure has excellent stainability, when staining is performed in the above staining conditions, in one aspect, staining can be performed at a high staining concentration of 50% or more. In addition, in another aspect, compared to the polymerizable composition in which the content of the acidic phosphate ester is below the numerical value range in the polymerizable composition of the present disclosure, the time required for staining at the same staining concentration can be shortened.

Examples of dyes used in the immersion staining method include oil-soluble dyes and disperse dyes. Among these, disperse dyes are preferable. Examples of disperse dyes include anthraquinone disperse dyes, azo disperse dyes, and quinolone disperse dyes. Among these, anthraquinone disperse dyes are preferable. These dyes may be used alone or two or more thereof may be used in combination so that a resin for an optical component can be stained in a desired color.

The content of the dye in the staining liquid is preferably 1 g/L or more and 10 g/L or less.

Preferably, the staining liquid further contains a surfactant.

Examples of surfactants include alkylbenzene sulfonate, alkylsulfosuccinate, lauryl sulfate, polyoxyethylene alkyl ether, polyoxyethylene sorbitan fatty acid ester, and polyoxyethylene stearylphenol ether sulfonic acid ester. These may be used alone or two or more thereof may be used in combination.

A carrier for promoting staining may be added to the staining liquid.

Examples of carriers include alcohols having an aromatic ring, phenolic compounds, naphthalene compounds, benzophenone compounds, and aromatic compounds containing halogen atoms.

Examples of alcohols having an aromatic ring include benzyl alcohol and cinnamyl alcohol.

Examples of phenolic compounds include o-phenylphenol and p-phenylphenol.

Examples of naphthalene compounds include methylnaphthalene.

Examples of aromatic compounds containing halogen atoms include monochlorobenzene, o-dichlorobenzene, m-dichlorobenzene, 1,2,4-trichlorobenzene, 1,2,5-trichlorobenzene, 1,3,5-trichlorobenzene, 1,2,3-trichlorobenzene, tetrachlorobenzene, pentachlorobenzene, hexachlorobenzene, monochloronaphthalene, and dichloronaphthalene. These may be used alone or two or more thereof may be used in combination.

When staining by an immersion staining method is difficult, staining may be performed by a pressurization staining method, a dye film heating method, a sublimation staining method or the like.

[Spectacles]

The spectacles according to one embodiment of the present disclosure include a spectacle lens and a frame on which the spectacle lens is mounted.

The frame includes, for example, a pair of rims, a bridge provided between the rims, and a pair of temples provided at one ends of the rims.

The rim may be a half rim.

The frame may be a so-called rimless frame. In this case, the spectacles include, for example, a pair of spectacle lenses, a bridge provided between the spectacle lenses, and a pair of temples provided at one ends of the spectacle lenses.

In the present disclosure, examples, contents, and various physical properties of the above components may be arbitrarily combined with matters described as examples or preferable ranges in the detailed description of the invention.

In addition, if compositions described in examples are adjusted to compositions described in the detailed description of the invention, embodiments according to the present disclosure can be implemented in the same manner as in examples over the entire claimed composition range.

[Examples]

While the present disclosure will be described below in more detail with reference to examples, the present disclosure is not limited to these examples.

Hereinafter, the present disclosure will be described in more detail with reference to examples. Measurement of thiol equivalents and thiol equivalent ratios of compositions containing a polythiol compound, evaluation of the appearances of polymerizable compositions for optical components, and evaluation of the appearance and stainability of optical components, which are polymers of the polymerizable compositions for optical components, were performed by the following procedures.

(Theoretical value and measured value of thiol equivalent)

The theoretical value of the thiol equivalent was calculated by dividing the number of thiol groups contained in one molecule of a polythiol compound having three or more mercapto groups in one molecule used when a polymerizable composition for optical components is prepared by the molecular weight of the polythiol compound. In addition, the measured value of the thiol equivalent of the polythiol compound was measured by the following method.

30 mL of chloroform and 30 mL of 2-propanol were added to about 0.1 g of a polythiol compound to be measured to prepare a sample solution. A 0.05 mol/L iodine solution was added dropwise to the sample solution, and the point at which the brown color of the added iodine solution did not disappear was set as the end point. Then, the measured value of the thiol equivalent is calculated from the following formula.

```
thiol equivalent (meq/g)=(titration amount (mL)×factor of iodine solution)/(sample amount (g)×10)
```

(Thiol equivalent ratio)

The thiol equivalent ratio was calculated by dividing the measured value of the thiol equivalent by the theoretical value of the thiol equivalent.

(Appearance of polymerizable composition for optical components)

The appearances of the polymerizable compositions for optical components immediately after they were prepared in examples and comparative examples were observed, and it was checked whether bubbles were generated. When no bubbles were generated, the appearance was evaluated as G, and when the generation of bubbles was observed, the appearance was evaluated as B.

(Appearance of optical component)

Projection inspection was performed using Optical Modulex SX-UI251HQ (commercially available from Ushio Inc.). A high pressure UV lamp USH-102D was used as a light source, a white screen was installed at a distance of 1 m, a test resin was inserted between the light source and the screen, a projected image on the screen was observed, and the appearance was determined based on the following criteria. A to C were satisfactory, and D and E were unsatisfactory.

A: There were no linear irregularities in the projected image.
B: There were very thin linear irregularities in the projected image.
C: There were thin linear irregularities in the projected image.
D: There were linear thick irregularities in the projected image.
E: There were significant linear irregularities in the projected image.

(Stainability of optical component)

Using a high-speed integrating sphere type spectral transmittance measuring instrument "DOT-3" (commercially available from Murakami Color Research Laboratory), the light transmittance of the sample at a wavelength of 550 nm was measured, and the staining concentration (%) was calculated using the following Formula (2).

$$\text{staining concentration (\%)} = 100(\%) - \text{light transmittance (\%) at 550 nm} \quad \dots (2)$$

A larger numerical value of the staining concentration indicates that the optical component was stained at a higher concentration.

Then, the time required for the staining concentration to reach 50% was measured, and the stainability was evaluated based on the following criteria.

E: stained very quickly (the staining concentration reached 50% within 10 minutes)
VG: stained quickly (the staining concentration reached 50% after more than 10 minutes but within 15 minutes)
G: stained slowly (the staining concentration reached 50% after more than 15 minutes but within 20 minutes)
B: stained very slowly (stained but the staining concentration did not reach 50% within 20 minutes)

Next, substrates for a spectacle lens of examples and comparative examples were produced as follows. Here, when polymerizable compositions for optical components of the examples and comparative examples were prepared, the following components were prepared in advance.

- Polyiso(thio)cyanate compound having one or more aromatic rings in one molecule: m-xylylene diisocyanate (hereinafter referred to as m-XDI)
- Polythiol compound having three mercapto groups in one molecule: 4,8-dimercaptomethyl-1,11-dimercapto-3,6,9-triciaundecane (hereinafter referred to as FSH). There were four types of thiol equivalent ratios: 0.920, 0.935, 0.950, and 1.000.
- Acidic phosphate ester compound (C): a mixture of butoxyethyl acid phosphate and dibutoxyethyl acid phosphate (product name: JP-506 commercially available from Jouhoku Chemical Industry)
- Polymerization catalyst: dimethyltin dichloride

(Example 1)

A mixture obtained by sufficiently stirring and mixing 50.6 parts by mass of m-XDI, 49.4 parts by mass of FSH having a thiol equivalent ratio of 0.935, and 0.10 parts by mass of JP-506 at room temperature was degassed at a reduced pressure of 5 mmHg to prepare a uniform monomer mixture. This monomer mixture was injected into a molding die including a pair of glass molds and a resin gasket. Here, the pair of glass molds having an upper mold curvature of 600 mm and a lower mold curvature of 120 mm were used, and the molding die was assembled so that the central wall thickness of the plastic lens was 5 mm, and the diameter was 75 mm.

After the monomer mixture was injected into the molding die, the temperature was raised from 20°C to 120°C over 15 hours, the mixture was heated and polymerized at 120°C for 4 hours, and cooled, and the plastic lens was removed from the molding die to obtain a substrate for a spectacle lens of Example 1.

(Staining of lens substrate for spectacles)

While stirring 1 L pure water in a beaker with a stirrer, the temperature was kept at 95°C using an indirect tank. Then, 5 mL of cinnamyl alcohol as a staining carrier, 5 mL of sodium 2-ethylhexyl sulfate (40 mass% aqueous solution) "Syntrex EH-R" (commercially available from NOF Corporation) as a surfactant, and 1.5 mL of polyoxyethylene stearylphenol ether sulfonic acid ester (35 mass% aqueous solution) "Neonol 20" (commercially available from Seiken Kako Co., Ltd.) were added to pure water in the warmed beaker. Then, 2.80 g of blue dye "FSP Blue AUL-S" (anthraquinone disperse dye, commercially available from Futaba Sangyo Co., Ltd.) as a disperse dye, 0.35 g of red dye "FSP Red E-A" (anthraquinone disperse dye, commercially available from Futaba Sangyo Co., Ltd.), 0.22 g of yellow dye "FSP Yellow FL" (commercially available from Futaba Sangyo Co., Ltd.), and 0.75 g of brown dye "FSP Red S-N" (commercially available from Futaba Sangyo Co., Ltd.) were added so that staining was performed in a gray color. Then, the aqueous solution in the beaker was stirred using a stirrer for 60 minutes or longer, and additives were uniformly dispersed and dissolved to produce a staining liquid. Here, during preparation of the staining liquid, the liquid temperature was kept constant so that the temperature was always maintained at a certain temperature of 95°C.

A lens substrate for spectacles was immersed and stained in a staining liquid at 95°C for 600 seconds. Then, the staining concentration was measured. The results are shown in Table 1.

(Examples 2 to 27)

In examples in which the content of the polymerization catalyst was "0" in Table 1, polymerizable compositions for optical components were produced in the same procedure as in Example 1 except that the thiol equivalent ratio and the amount of the acidic phosphate ester compound used were changed to values shown in Table 1, and in the other examples, polymerizable compositions for optical components were produced in the same procedure as in Example 1 except that the thiol equivalent ratio and the amount of the acidic phosphate ester compound used were changed to values shown in Table 1 and the polymerization catalyst was stirred and mixed together with other materials with the contents shown in Table 1. Then, substrates for a spectacle lens were produced and stained in the same procedure as in Example 1.

(Comparative Examples 1 to 7)

Polymerizable compositions for optical components were produced in the same procedure as in Example 1 except that the thiol equivalent ratio and the amount of the acidic phosphate ester compound used were changed to values shown in Table 1, and the polymerization catalyst was stirred and mixed together with other materials with the contents shown in Table 1. Then, substrates for a spectacle lens were produced and stained in the same procedure as in Example 1.

The results are shown in Table 1.

[Table 1]

Table 1

| | Thiol equivalent ratio | Content of acidic phosphate ester (parts by mass*) | Content of polymerization catalyst (parts by mass*) | Appearance of composition | Appearance of optical component (before staining) | Stainability of optical component |
| --- | --- | --- | --- | --- | --- | --- |
| Example 1 | 0.935 | 0.10 | 0 | G | C | E |

(continued)

| | Thiol equivalent ratio | Content of acidic phosphate ester (parts by mass*) | Content of polymerization catalyst (parts by mass*) | Appearance of composition | Appearance of optical component (before staining) | Stainability of optical component |
|---|---|---|---|---|---|---|
| Example 2 | 0.935 | 0.10 | 0.003 | G | B | VG |
| Example 3 | 0.935 | 0.10 | 0.006 | G | B | VG |
| Example 4 | 0.935 | 1.00 | 0 | G | C | E |
| Example 5 | 0.935 | 1.00 | 0.003 | G | B | VG |
| Example 6 | 0.935 | 1.00 | 0.006 | G | B | VG |
| Example 7 | 0.935 | 3.00 | 0 | G | C | E |
| Example 8 | 0.935 | 3.00 | 0.003 | G | B | E |
| Example 9 | 0.935 | 3.00 | 0.006 | G | B | E |
| Example 10 | 0.950 | 0.10 | 0 | G | B | E |
| Example 11 | 0.950 | 0.10 | 0.003 | G | B | VG |
| Example 12 | 0.950 | 0.10 | 0.006 | G | A | VG |
| Example 13 | 0.950 | 1.00 | 0 | G | B | E |
| Example 14 | 0.950 | 1.00 | 0.003 | G | B | VG |
| Example 15 | 0.950 | 1.00 | 0.006 | G | A | VG |
| Example 16 | 0.950 | 3.00 | 0 | G | B | E |
| Example 17 | 0.950 | 3.00 | 0.003 | G | B | E |
| Example 18 | 0.950 | 3.00 | 0.006 | G | A | E |
| Example 19 | 1.000 | 0.10 | 0 | G | B | E |
| Example 20 | 1.000 | 0.10 | 0.003 | G | A | VG |
| Example 21 | 1.000 | 0.10 | 0.006 | G | A | VG |
| Example 22 | 1.000 | 1.00 | 0 | G | B | E |
| Example 23 | 1.000 | 1.00 | 0.003 | G | A | VG |
| Example 24 | 1.000 | 1.00 | 0.006 | G | A | VG |
| Example 25 | 1.000 | 3.00 | 0 | G | B | E |
| Example 26 | 1.000 | 3.00 | 0.003 | G | A | E |
| Example 27 | 1.000 | 3.00 | 0.006 | G | A | E |
| Comparative Example 1 | 0.920 | 0.04 | 0.010 | G | E | B |
| Comparative Example 2 | 0.920 | 0.04 | 0.020 | G | D | B |
| Comparative Example 3 | 0.950 | 0.04 | 0.010 | G | C | B |
| Comparative Example 4 | 0.950 | 0.04 | 0.020 | G | B | B |
| Comparative Example 5 | 1.000 | 0.04 | 0.010 | G | A | B |

(continued)

| | Thiol equivalent ratio | Content of acidic phosphate ester (parts by mass*) | Content of polymerization catalyst (parts by mass*) | Appearance of composition | Appearance of optical component (before staining) | Stainability of optical component |
|---|---|---|---|---|---|---|
| Comparative Example 6 | 1.000 | 0.04 | 0.020 | G | A | B |
| Comparative Example 7 | 1.000 | 4.00 | 0.020 | B | A | E |
| *: value with respect to a total amount of 100 parts by mass of the polyiso(thio)cyanate compound (A) and the polythiol compound (B) | | | | | | |

As can be clearly understood from Table 1, it can be seen that the polymerizable compositions for optical components of Examples 1 to 27 were colorless and transparent without the generation of bubbles. In addition, it can be seen that, if these compositions were used, polymerization was performed without the polymerization catalyst or even if the content of the polymerization catalyst was very small compared to Comparative Examples 1 to 6. In addition, it can be seen that the obtained optical components exhibited favorable optical properties with less stripes, and the obtained colored optical components were colored at a sufficient concentration. As can be clearly seen from these experiment results, it can be understood that, when an appropriate amount of the acid ester compound was contained, the stainability was improved without deteriorating the optical performance of the optical component, and the acid ester compound functioned as the catalyst.

On the other hand, in the polymerizable compositions for optical components of Comparative Examples 1 to 6, there were no particular problems in the appearance and the generation of bubbles was not observed, but the amount of the polymerization catalyst used was larger than those of the examples. Then, it can be seen that, except for Comparative Example 2, in the optical components produced using these, the appearance was at a level equal to or higher than that of the examples, and the occurrence of stripes was in an allowable range, but the stainability was inferior to that of the examples. That is, it can be seen that, when the amount of the acid ester compound was smaller than those of Examples 1 to 27, and the amount of the polymerization catalyst was smaller than those of Examples 1 to 27, the composition could be polymerized to obtain an optical component, but the obtained optical component had poor stainability.

In the polymerizable composition for optical components of Comparative Example 7, bubbles were observed in the polymerizable composition itself due to an excessive content of the acidic phosphate ester compound. Therefore, it can be seen that time and effort were required to sufficiently remove bubbles before the optical component was produced, bubbles unintentionally remained in the optical component, and there was a risk of characteristics of the optical component being impaired.

Finally, the embodiments of the present disclosure will be summarized.

A polymerizable composition for optical components, which is an embodiment of the present disclosure, contains a polyiso(thio)cyanate compound (A) having one or more aromatic rings in one molecule, a polythiol compound (B) having three or more mercapto groups in one molecule, and an acidic phosphate ester compound (C), and in which the content of the acidic phosphate ester compound (C) is 0.1 to 3.0 parts by mass with respect to a total amount of 100 parts by mass of the polyiso(thio)cyanate compound (A) and the polythiol compound (B), and the content of the polymerization catalyst is 0.006 parts by mass or less with respect to a total amount of 100 parts by mass of the polyiso(thio)cyanate compound (A) and the polythiol compound (B).

According to the above embodiments, it is possible to obtain a polymerizable composition for an optical material in which a polymer thereof is easily stained with a dye and the content of the polymerization catalyst can be reduced.

The embodiments disclosed here are only examples in all respects and should not be considered as restrictive. The scope of the present disclosure is indicated by the scope of the claims rather than the above description, and is intended to include meanings equivalent to the scope of the claims and all modifications within the scope of the claims.

In the present disclosure, examples, contents, and various physical properties of the above components may be arbitrarily combined with matters described as examples or preferable ranges in the detailed description of the invention.

In addition, if the compositions described in the examples are adjusted to compositions described in the detailed description of the invention, the disclosed embodiments can be implemented in the same manner as in examples over the entire claimed composition range.

**Claims**

1. A polymerizable composition for optical components, including:

   a polyiso(thio)cyanate compound (A) having one or more aromatic rings in one molecule, a polythiol compound (B) having three or more mercapto groups in one molecule, and an acidic phosphate ester compound (C), wherein the content of the acidic phosphate ester compound (C) is 0.1 to 3.0 parts by mass with respect to a total amount of 100 parts by mass of the polyiso(thio)cyanate compound (A) and the polythiol compound (B), and wherein the content of a polymerization catalyst is 0.006 parts by mass or less with respect to a total amount of 100 parts by mass of the polyiso(thio)cyanate compound (A) and the polythiol compound (B).

2. The polymerizable composition for optical components according to claim 1,
   wherein the polymerization catalyst is a tin-containing compound.

3. The polymerizable composition for optical components according to, claim 1 or 2,
   wherein the content of the acidic phosphate ester compound (C) is 0.5 to 3.0 parts by mass with respect to a total amount of 100 parts by mass of the polyiso(thio)cyanate compound (A) and the polythiol compound (B).

4. The polymerizable composition for optical components according to any one of claims 1 to 3,
   wherein the polyiso(thio)cyanate compound (A) includes xylylene diisocyanate.

5. The polymerizable composition for optical components according to any one of claims 1 to 4,
   wherein the content of the polythiol compound (B) is larger than the content of the polyiso(thio)cyanate compound (A) .

6. The polymerizable composition for optical components according to any one of claims 1 to 5,
   wherein a thiol equivalent ratio of a measured value of a thiol equivalent to a theoretical value of a thiol equivalent of the polythiol compound (B) is in a range of 0.935 to 1.000.

7. An optical component composed of a polymer of the polymerizable composition for optical components according to any one of claims 1 to 6.

8. A colored optical component obtained by staining the optical component according to claim 7 with a dye.

<div align="center">

**INTERNATIONAL SEARCH REPORT**

</div>

| | International application No. |
|---|---|
| | PCT/JP2020/036741 |

**A. CLASSIFICATION OF SUBJECT MATTER**
C08G 18/38(2006.01)i; C08G 18/24(2006.01)i; C08K 5/521(2006.01)i;
C08L75/04(2006.01)i; G02B1/04(2006.01)i; G02C7/10(2006.01)i
FI: C08G18/38 076; C08K5/521; C08G18/24; C08L75/04; G02B1/04; G02C7/10
According to International Patent Classification (IPC) or to both national classification and IPC

**B. FIELDS SEARCHED**

Minimum documentation searched (classification system followed by classification symbols)
C08G18/00-18/87; C08G71/00-71/04; C08K3/00-13/08; C08L1/00-101/14;
G02B1/00-3/14; G02C1/00-13/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/179575 A1 (MITSUI CHEMICALS, INC.) 19 October 2017 (2017-10-19) claims, paragraphs [0156], [0165]-[0169], example 1, etc. | 1–8 |
| A | JP 2016-069581 A (HOYA LENS THAILAND LTD.) 09 May 2016 (2016-05-09) entire text | 1–8 |
| A | JP 2015-520765 A (KOC SOLUTION CO., LTD.) 23 July 2015 (2015-07-23) entire text | 1–8 |
| A | JP 9-071625 A (MITSUI TOATSU CHEMICALS, INC.) 18 March 1997 (1997-03-18) entire text | 1–8 |
| A | WO 2012/090372 A1 (MITSUBISHI GAS CHEMICAL CO., INC.) 05 July 2012 (2012-07-05) entire text | 1–8 |
| A | WO 2017/209104 A1 (NIKON-ESSILOR CO., LTD.) 07 December 2017 (2017-12-07) entire text | 1–8 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 December 2020 (01.12.2020) | 08 December 2020 (08.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| International application No. |
| --- |
| PCT/JP2020/036741 |

| Patent Documents referred in the Report | Publication Date | Patent Family | Publication Date |
| --- | --- | --- | --- |
| WO 2017/179575 A1 | 19 Oct. 2017 | US 2019/0106529 A1 claims, paragraphs [0155], [0165]- [0169], example 1, etc. EP 3444236 A1 | |
| JP 2016-069581 A | 09 May 2016 | WO 2016/052120 A1 US 2017/0240683 A1 EP 3202805 A1 | |
| JP 2015-520765 A | 23 Jul. 2015 | WO 2013/176506 A1 US 2015/0148512 A1 EP 2853527 A1 | |
| JP 9-071625 A | 18 Mar. 1997 | US 5736609 A entire text EP 751161 A2 | |
| WO 2012/090372 A1 | 05 Jul. 2012 | US 2013/0267673 A1 entire text EP 2660260 A1 | |
| WO 2017/209104 A1 | 07 Dec. 2017 | US 2019/0154878 A1 entire text EP 3467574 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7252207 B
- JP 2016006958 A
- JP 2016069582 A